# EUROPÄISCHE PATENTSCHRIFT

(11) **EP 1 227 691 B1**
(45) Veröffentlichungstag und Bekanntmachung des Hinweises auf die Patenterteilung: **28.06.2006**
(21) Anmeldenummer: 01127965.0
(22) Anmeldetag: 23.11.2001
(51) Int. Cl.: H04Q 7/34, H04L 12/26

(54) **Verteiltes Testsystem zum Prüfen und Überwachen elektronischer Signale auf Netzwerkverbindungen**
Distributed test system for testing and monitoring electronic signals on network connections
Système de test distribué pour tester et surveiller des signaux électroniques sur les connexions d'un réseau

(30) Priorität: 26.01.2001 DE 10103725; 23.05.2001 DE 10125382
(43) Veröffentlichungstag der Anmeldung: 31.07.2002
(73) Patentinhaber: Wendisch, Dieter, Dr.- Ing., 14167 Berlin (DE)
(72) Erfinder: Wendisch, Dieter, Dr.- Ing., 14167 Berlin (DE)
(74) Vertreter: Liesegang, Eva

(56) Entgegenhaltungen:
- EP-A- 0 726 664
- WO-A-00/31963
- WO-A-00/39962
- US-A- 6 091 950
- ROSAR W.: 'NTZ (NACHRICHTENTECHNISCHE ZEITSCHRIFT)', Bd. 47, teil 9 01 September 1994, VDE VERLAG GMBH, BERLIN, DE Artikel 'TESTSTRATEGIEN, MESSGERAETE UND -SYSTEME IM GSM - TEIL 1', Seiten 654 - 658, XP000468041
- ROSAR W.: 'NTZ (NACHRICHTENTECHNISCHE ZEITSCHRIFT)', Bd. 47, teil 10 01 Oktober 1994, VDE VERLAG GMBH, BERLIN, DE Artikel 'TESTSTRATEGIEN, MESSGERATE UND -SYSTEME IM GSM - TEIL 2', Seiten 726-730 - 732, XP000473217

## Beschreibung

Die Erfindung betrifft ein Verfahren und eine Vorrichtung zum Testen bzw. Prüfen von Netzwerkverbindungen, über welche elektronische Daten zwischen Netzwerkelementen eines Netzwerks ausgetauscht werden, insbesondere zwischen Elementen eines Telekommunikationsnetzwerks, eines Netzwerks verkehrstechnischer oder energietechnischer Anlagen.

In einem Netzwerk, beispielsweise einem Telekommunikationsnetzwerk, sind üblicherweise mehrere Netzwerkelemente so miteinander verbunden, daß ein Netzwerkelement mit wenigstens einem anderen Netzwerkelement oder mit mehreren anderen Netzwerkelementen elektronische Daten austauschen kann. Der Datenaustausch zwischen den Netzwerkelementen kann mit Hilfe von Drahtverbindungen und/oder drahtlosen Verbindungen ausgeführt werden. Insbesondere die zunehmende Vernetzung einzelner Netzwerke (z.B. Telefon-, Daten-, Multimedianetzwerke), die ursprünglich als getrennte Netzwerke existierten, zu größeren Netzwerken, führt dazu, daß verschiedene Übertragungsarten in einem solchen größeren Netzwerk genutzt werden.

Im Folgenden werden Netzwerk und Netz als synonyme Begriffe für eine Anordnung von elektrischen/elektronischen Vorrichtungen verwendet, zwischen denen über drahtlose Verbindungen und/oder Drahtverbindungen elektronische Informationen austauschbar sind. Ein Netzwerk kann beispielsweise mobile Telekommunikationsnetze umfassen, in denen wesentliche Teile verschiedener elektronischer Informationsarten (Sprache, Text, Bild und Daten) zwischen Netzwerkelementen, beispielsweise Mobilfunktelefone, über ein Funknetz übertragen werden. Mobile Telekommunikatisonsnetzwerke existieren gegenwärtig in verschiedenen Ausprägungsformen, wobei von einer Ausprägungsform unterschiedliche Entwicklungsgenerationen vorhanden sein können. Zellulare, mobile Telekommunikationsnetze bzw. Mobilkommunikationsnetze auf Funkbasis stellen das mobile Äquivalent zu festen, öffentlichen Telekommunikationsnetzen dar, wie Fernsprechnetze oder das ISDN-Netz. Die Mobilkommunikationsnetze sind über geeignete Netzübergänge mit den Festnetzen verbunden.

Andere Netzwerke betreffen die netzartige Zusammenschaltung von energietechnischen oder verkehrstechnischen Anlagen, so daß elektronische Daten über Datenverbindungen austauschbar sind, wobei auch eine beliebige Kombination von Einrichtungen aus verschiedenen technischen Bereichen in einem Netzwerk verbunden sein können.

Das heute übliche Mobilkommunikationsnetz ist ein Netzwerk bzw. Netz der sogenannten zweiten Generation, in welchem der GSM-Standard (GSM - Global System for Mobile Communication) genutzt wird. GSM-Netze weisen eine einheitliche Funkschnittstelle zwischen mobilen Benutzerstationen und dem Netz auf, über die die verschiedenen Informationsarten (Sprache, Text, Bild und Daten) in Form digitaler Signale übermittelt werden können.

Eine Weiterentwicklung gegenüber dem GSM-Standard stellt der GPRS-Standard (GPRS - General Packet Radio Service) dar. Hierbei werden die elektronischen Daten in dem GSM-Netzwerk paketbasiert übermittelt. Dieses bedeutet, daß die zu übermittelnden, elektronischen Informationen vor der Übertragung in Pakete zerlegt und am Empfangsort wieder zusammengesetzt werden.

Während in einem herkömmlichen GSM-Netzwerk Übertragungsraten von etwa 9,6 kBits/s pro Teilnehmer möglich sind, erlaubt GPRS eine Übertragungsbandbreite von etwa 150 kBits/s pro Teilnehmer. Eine wesentliche Verbesserung der Übertragungsbandbreite soll mit der zukünftigen, sogenannten dritten Generation mobiler Kommunikationsnetze (IMT2000 oder UMTS mit bis zu 2 MBit/s) erreicht werden.

Unabhängig von der konkreten Ausprägung des mobilen Kommunikationsnetzwerks und dem jeweils verwendeten Übertragungsstandard ist den verschiedenen Ausführungen gemeinsam, daß eine Vielzahl von Netzwerkelementen miteinander in Verbindung stehen bzw. Verbindungen zwischen den verschiedenen Netzwerkelementen zeitlich begrenzt aufgebaut werden können, so daß eine Vielzahl von Verbindungen bestehen, die zu einer hohen Komplexität des elektronischen Datenaustausches in dem jeweiligen Netzwerk führen.

Diese Komplexität und die geographisch flächendeckende Verteilung der Netzwerkelemente erschwert das Prüfen von elektronischen Verbindungen, insbesondere zum Zweck der Fehlersuche und der Fehlerortung, innerhalb von Netzwerken, in denen elektronische Informationen unter Einbeziehung von Festnetzen und/oder mobilen Kommunikationsnetzen ausgetauscht werden.

Aus der Druckschrift EP 0 726 664 A2 sind ein Verfahren und eine Vorrichtung zum Prüfen elektronischer Signale in einem Netzwerk mit Netzwerkeinrichtungen bekannt. In dem Netzwerk sind zur Prüfung der elektronischen Datenübertragung mehrere Übertragungsanalysierer verteilt, die jeweils an eine Netzwerkverbindung so gekoppelt sind, daß sie über die jeweilige Netzwerkverbindung übertragene Daten erfassen können. Mit Hilfe der mehreren Übertragungsanalysierer werden Prüfaufgaben zur Überprüfung der Datenübertragung in dem Netzwerk ausgeführt. Zur Einbeziehung der mehreren Übertragungsanalysierer in ein Prüfverfahren werden die mehreren Übertragungsanalysierer zeitlich automatisch synchronisiert, wobei einer der mehreren Übertragungsanalysierer hierbei als "Master" fungieren kann. Die mehreren Übertragungsanalysierer werden mit Hilfe eines Steuercomputers, bei dem es sich beispielsweise um einen Personalcomputer handeln kann, während des Prüfverfahrens gesteuert. Die mit Hilfe der mehreren Übertragungsanalysierer erfaßten Prüfsignale werden mit einem Zeitstempel versehen und können an den Steuercomputer übermittelt werden, um das Prüfverfahren auszuwerten. Hierbei wird die Zeitstempel-Information berücksichtigt.

Aus der Druckschrift WO 00/39962 sind ein System, ein Analysierer und ein Verfahren zum Synchronisieren eines verteilten Systems bekannt. In dem bekannten System sind ebenfalls mehrere Analysierer verteilt und untereinander zeitlich synchronisiert, um Prüfinformationen über Datenübertragungen zu erfassen.

Aufgabe der Erfindung ist es, ein Verfahren und eine Vorrichtung zum Prüfen bzw. Testen von Verbindungen in einem Netzwerk zu schaffen, insbesondere zur effektiven Fehlersuche bzw. -ortung, welche anwendungsabhängig ein kostengünstiges Prüfen in dem Netzwerk ermöglichen.

Diese Aufgabe wird erfindungsgemäß durch ein Verfahren nach Anspruch 1 und eine Vorrichtung nach Anspruch 9 gelöst.

Nach einem Aspekt der Erfindung ist ein Verfahren geschaffen zum Prüfen elektronischer Signale in einem Netzwerk mit Netzwerkeinrichtungen zwischen denen über Netzwerkverbindungen Informationen mit Hilfe elektronischer Datenübertragung austauschbar sind, wobei mehrere Prüfeinrichtungen jeweils an eine oder mehrere der Netzwerkverbindungen gekoppelt sind, so daß mit Hilfe der Prüfeinrichtungen jeweils elektronische Signale betreffend die elektronische Datenübertragung über die eine oder die mehreren Netzwerkverbindungen, an welche die jeweilige Prüfeinrichtung gekoppelt ist, erfaßt werden können, das Verfahren die folgenden Schritte aufweisend:
- Ausbilden einer Prüfverbindung zum Austauschen von elektronischen Signalen, die Prüf- und/oder Steuersignale umfassen, zwischen einer der Prüfeinrichtungen und mindestens einer anderen der Prüfeinrichtungen in Abhängigkeit von einer aktuellen Prüfaufgabe, wobei die eine Prüfeinrichtung an eine Netzwerkverbindung und die mindestens eine andere Prüfeinrichtung an eine andere Netzwerkverbindung in dem Netzwerk gekoppelt sind;
- Ausbilden einer Master-Server-Konfiguration in Abhängigkeit von der aktuellen Prüfaufgabe, wobei die eine Prüfeinrichtung als eine Master-Prüfeinrichtung und die mindestens eine andere Prüfeinrichtung als eine Server-Prüfeinrichtung konfiguriert werden;
- automatisches zeitliches Synchronisieren der Master-Prüfeinrichtung und der Server-Prüfeinrichtung;
- elektronisches Initiieren einer Erfassung von aktuellen, elektronischen Prüfsignalen durch die Master-Prüfeinrichtung auf der anderen Netzwerkverbindung mittels der Server-Prüfeinrichtung und Zuordnen einer elektronischen Zeitinformation zu den erfaßten aktuellen, elektronischen Prüfsignalen unter automatischer Berücksichtigung des vorher erfolgten zeitlichen Synchronisierens;
- Verarbeiten der erfaßten aktuellen, elektronischen Prüfsignale und der zugeordneten elektronischen Zeitinformation durch die Server-Prüfeinrichtung und / oder die Master-Prüfeinrichtung unter automatischer Berücksichtigung der zugeordneten elektronischen Zeitinformation;
- Erzeugen von Simulationssignalen mittels der Master-Prüfeinrichtung und / oder der Server-Prüfeinrichtung und Einspeisen der Simulationssignale in das Netzwerk, wobei
   - im Fall des Erzeugens der Simulationssignale mit der Master-Prüfeinrichtung in der Master-Prüfeinrichtung elektronische Informationen über die Simulationssignale, einschließlich zugehöriger elektronischer Simulationssignal-Zeitinformation in Abhängigkeit von dem vorher erfolgten zeitlichen Synchronisieren, gespeichert werden, und die in der Master-Prüfeinrichtung gespeicherten elektronischen Informationen über die Simulationssignale beim Verarbeiten der von der Server-Prüfeinrichtung an die Master-Prüfeinrichtung übermittelten aktuellen, elektronischen Prüfsignale automatisch berücksichtigt werden, und
   - im Fall des Erzeugens der Simulationssignale mit der Server-Prüfeinrichtung elektronische Informationen über die Simulationssignale, einschließlich zugehöriger elektronischer Simulationssignal-Zeitinformation in Abhängigkeit von dem vorher erfolgten zeitlichen Synchronisieren, von der Server-Prüfeinrichtung an die Master-Prüfeinrichtung übermittelt werden und die von der Server-Prüfeinrichtung an die Master-Prüfeinrichtung übermittelten elektronischen Informationen über die Simulationssignale beim Verarbeiten der von der Server-Prüfeinrichtung an die Master-Prüfeinrichtung übermittelten aktuellen elektronischen Prüfsignale automatisch berücksichtigt werden.

Nach einem weiteren Aspekt der Erfindung ist eine Vorrichtung geschaffen zum Prüfen elektronischer Signale in einem Netzwerk mit Netzwerkeinrichtungen zwischen denen über Netzwerkverbindungen Informationen mit Hilfe elektronischer Datenübertragung austauschbar sind, die Vorrichtung umfassend:
- Anschlußmittel zum Ankoppeln an eine oder mehrere der Netzwerkverbindungen;
- Schnittstellenmittel zum Ausbilden einer Prüfverbindung mit mindestens einer anderen Prüfvorrichtung in Abhängigkeit von einer aktuellen Prüfaufgabe, um elektronische Daten, die Prüf- und / oder Steuersignale umfassen, mit der mindestens einen anderen der Prüfvorrichtung auszutauschen;
- Konfigurationsmittel zum Ausbilden einer Master- oder einer Server-Konfiguration mit der mindestens einen anderen Prüfvorrichtung in Abhängigkeit von der aktuellen Prüfaufgabe;
- Synchronisierungsmittel zum zeitlichen Synchronisieren mit der mindestens einen anderen Prüfvorrichtung;
- Erfassungsmittel zum Erfassen aktueller elektronischer Prüfsignale betreffend eine elektronische Datenübertragung über die eine oder die mehreren Netzwerkverbindungen;
- Zuordnungsmittel zum automatischen Zuordnen einer elektronischen Zeitinformation zu erfaßten aktuellen, elektronischen Prüfsignalen unter automatischer Berücksichtigung des zeitlichen Synchronisierens mit der mindestens einen anderen Prüfvorrichtung;
- Sendemittel zum Senden der erfaßten aktuellen, elektronischen Prüfsignale und der zugeordneten elektronischen Zeitinformation an die mindestens eine andere Prüfvorrichtung;
- Verarbeitungsmittel zum Verarbeiten der erfaßten aktuellen, elektronischen Prüfsignale und der zugeordneten elektronischen Zeitinformation; und
- Simulationsmittel zum Erzeugen von Simulationssignalen und zum Einspeisen der Simulationssignale in das Netzwerk sowie zum Speichern elektronischer Informationen über die Simulationssignale, einschließlich zugehöriger elektronischer Simulationssignal-Zeitinformation in Abhängigkeit von dem zeitlichen Synchronisieren, in einer als Master-Prüfvorrichtung ausgebildeten Prüfvorrichtung für den Fall des Erzeugens der Simulationssignale in der als Master-Prüfvorrichtung ausgebildeten Prüfvorrichtung und zum Übermitteln elektronischer Informationen über die Simulationssignale, einschließlich zugehöriger elektronischer Simulationssignal-Zeitinformation in Abhängigkeit von dem vorher erfolgten zeitlichen Synchronisieren, von einer als Server-Prüfvorrichtung ausgebildeten Prüfvorrichtung an die als Master-Prüfvorrichtung ausgebildeten Prüfvorrichtung für den Fall des Erzeugens der Simulationssignale in der als Server-Prüfvorrichtung ausgebildeten Prüfvorrichtung.

Ein wesentlicher Vorteil, welcher mit der Erfindung gegenüber dem Stand der Technik erreicht wird, besteht darin, daß in Netzwerken, insbesondere in Netzwerken mit Netzwerkelementen, die sich an verschiedenen, voneinander entfernten Orten befinden, Prüfeinrichtungen flexibel in Abhängigkeit von einer konkreten Prüfaufgabe zum Erfassen und Sammeln der zur Lösung der Prüfaufgabe notwendigen Prüfsignale genutzt werden können. Je nach Anwendungsfall können die vorhandenen Prüfeinrichtungen konfiguriert werden, um die gewünschten Prüfsignale zur erfassen, zu sammeln bzw. zu verarbeiten. Bei der Auswahl der Prüfeinrichtungen für die konkrete Prüfaufgabe kann zweckmäßig berücksichtigt werden, an welcher Stelle des Netzwerks die jeweilige Prüfeinrichtung angekoppelt ist. Hieraus ergibt sich, welche Prüfsignale die einzelne Prüfeinrichtung in Verbindung mit der gestellten Prüfaufgabe liefern kann oder nicht.

Ein weiterer Vorteil besteht darin, daß bei Ausfall einer Prüfeinrichtung mit Hilfe anderer Prüfeinrichtungen im Netzwerk versucht werden kann, die anstehende Prüfaufgabe zu lösen. Zu diesem Zweck kann es vorteilhaft sein, die anderen Prüfeinrichtungen so auszuwählen, daß über diese die gleichen Prüfinformationen erfaßt werden, wie sie erfaßt würden, wenn die ausgefallene Prüfeinrichtung funktionstüchtig wäre. Es ist allerdings auch möglich, daß mit Hilfe der anderen Prüfeinrichtungen Prüfsignale erfaßt werden, die in Abhängigkeit zu den Prüfsignalen stehen, die üblicherweise mit der ausgefallenen Prüfeinrichtung erfaßt werden können.

Die im Rahmen des Verfahrens zum Prüfen vorgesehene zeitliche Synchronisation der Prüfeinrichtungen stellt sicher, daß die beim Lösen der konkreten Prüfaufgabe eingebundenen Prüfeinrichtungen, die in der Regel über das Netzwerk verteilt sind, für jeden Anwendungsfall zeitlich synchronisiert sind. Dieses ist von Bedeutung, wenn die im Rahmen der Prüfaufgabe zusammenarbeitenden Prüfeinrichtungen in Abhängigkeit vom Anwendungsfall stets neu ausgewählt und verbunden werden.

Eine zweckmäßige Weiterbildung der Erfindung sieht vor, daß nach einem Abschluß der aktuellen Prüfaufgabe eine weitere aktuelle Prüfaufgabe ausgeführt wird, bei der eine weitere Master-Server-Konfiguration in Abhängigkeit von der weiteren aktuellen Prüfaufgabe ausgebildet wird, wobei die mindestens eine andere Prüfeinrichtung als eine Master-Prüfeinrichtung und die eine Prüfeinrichtung als eine Server-Prüfeinrichtung konfiguriert werden. Hierdurch ist sichergestellt, daß in Abhängigkeit vom Anwendungsfall einer bestimmten Prüfeinrichtung eine Master- oder eine Server-Prüffunktion zugeordnet werden kann, so daß eine individuelle Anpassung der Prüfeinrichtungen an die jeweilige Prüf- bzw. Testaufgabe erfolgen kann.

Bei einer bevorzugten Ausgestaltung der Erfindung ist vorgesehen, daß das Ausbilden der Master-Server-Konfiguration in Abhängigkeit von der aktuellen Prüfaufgabe und/oder das Ausbilden der weiteren Master-Server-Konfiguration in Abhängigkeit von der weiteren aktuellen Prüfaufgabe auf einen vorgegebenen Zeitraum begrenzt werden, dessen zeitliche Dauer von der aktuellen bzw. von der weiteren aktuellen Prüfaufgabe abhängt. Hierdurch wird gewährleistet, daß die Prüfeinrichtungen nach dem Erfüllen der jeweiligen Funktion in einer Prüfaufgabe nicht unnötig für abgearbeitete Prüfaufgaben belegt werden und für eine folgende Prüfaufgabe frei sind bzw. zur Verfügung stehen.

Zur verbesserten Verarbeitung elektronischer Signale, die verschiedene Funktionen erfüllen, sieht eine vorteilhafte Ausführungsform der Erfindung vor, daß zwischen der Master-Prüfeinrichtung und der Server-Prüfeinrichtung zum automatischen zeitlichen Synchronisieren der Master-Prüfeinrichtung und der Server-Prüfeinrichtung eine Synchronisierungsverbindung ausgebildet wird, über welche Synchronisierungssignale ausgetauscht werden. Hierdurch ist eine einfache Trennung von Prüf- und Synchronisierungssignalen ermöglicht.

Eine insbesondere in Verbindung mit einer Prüfaufgaben, bei der mehrere Server-Prüfeinrichtung mit einer Master-Prüfeinrichtung zusammen arbeiten, bevorzugte Ausführungsform der Erfindung sieht vor, daß Synchronisierungssignale, die von der Master-Prüfeinrichtung an die Server-Prüfeinrichtung übersandt werden, Zeitnormalsignale umfassen, so daß das automatische zeitliche Synchronisieren von der Master-Prüfeinrichtung veranlaßt wird. Hierdurch kann eine einheitliche zeitliche Synchronisation der mit der Master-Prüfeinrichtung zusammenwirkenden Server-Prüfeinrichtungen sichergestellt werden.

Eine zeitliche Synchronisation hoher Güter wird bei einer zweckmäßigen Ausführungsform der Erfindung dadurch erreicht, daß zum automatischen zeitlichen Synchronisieren von der Master-Prüfeinrichtung und/oder von der Server-Prüfeinrichtung Zeitnormalsignale empfangen werden, die über Funkverbindungen gesendet werden. Auf diese Weise können Zeitnormalsignale von Funkuhren oder Satellitenstationen genutzt werden.

Bei einer bevorzugten Ausführungsform der Erfindung kann vorgesehen sein, daß beim Ausbilden der Prüfverbindung und beim Ausbilden der Master-Server-Konfiguration in Abhängigkeit von der aktuellen Prüfaufgabe und/oder beim Ausbilden der weiteren Master-Server-Konfiguration in Abhängigkeit von der weiteren aktuellen Prüfaufgabe elektronische Informationen über charakteristische Kenngrößen des Netzwerks automatisch berücksichtigt werden. Hierdurch ist es möglich, beim Lösen der konkreten Prüfaufgabe beispielsweise statistische Informationen über das ortsabhängige Auftreten und die Häufigkeit von Fehlern in dem Netzwerk automatisch zu berücksichtigen, so daß das Vorgehen zum Lösen der Prüfaufgabe dahingehend optimiert wird, daß die Prüfsignale erfaßt werden, die einerseits mit großer Wahrscheinlichkeit die notwendigen Fehlerinformationen umfassen und andererseits zur Fehlerortung bzw. -erkennung vorteilhaft ausgewertet werden können.

Ein in Abhängigkeit vom Anwendungsfall individuell konfigurierbare Ausprägung der Anordnung der Prüfeinrichtungen zum optimierten Ausführen des Verfahrens wird bei einer bevorzugten Ausführungsform der Erfindung dadurch erreicht, daß die Master-Server-Konfiguration in Abhängigkeit von der aktuellen Prüfaufgabe und/oder die weitere Master-Server-Konfiguration in Abhängigkeit von der weiteren aktuellen Prüfaufgabe mit Hilfe eines Client-Server-Verfahrens ausgebildet werden.

Die in den abhängigen Vorrichtungsansprüchen offenbarten, vorteilhaften Weiterbildungen weisen die in Verbindung mit zugehörigen Verfahrensmerkmalen beschriebenen Vorteile entsprechend auf. Hierbei ist es zur Verbesserung der Benutzerfreundlichkeit der Prüfvorrichtung von Vorteil, wenn die Vorrichtung Anzeigemittel zum elektronischen Ausgeben der erfaßten aktuellen, elektronischen Prüfsignale und/oder der mit Hilfe der Verarbeitungsmittel verarbeiteten aktuellen, elektronischen Prüfsignale und/oder eine Benutzerschnittstelle zum Erfassen von Benutzereingaben und/oder zum Ausgeben von Benutzerinformationen aufweist.

Das Verfahren und die Vorrichtung zum Prüfen elektronischer Signale in einem Netzwerk entfalten ihre Vorteile insbesondere bei einer Verwendung in einem Telekommunikationsnetzwerk, beispielsweise einem GSM-Netzwerk, einem GPRS-Netzwerk oder einem UMTS-Netzwerk.

Die Erfindung wird im Folgenden anhand von Ausführungsbeispielen unter Bezugnahme auf eine Zeichnung näher erläutert. Hierbei zeigen:
- Figur 1: eine beispielhafte Architektur für ein Netzwerk nach dem GSM-Standard;
- Figur 2: eine Teilstruktur eines Netzwerks nach dem GPRS-Standard;
- Figur 3: eine Architektur nach Figur 1, wobei an einzelne Netzwerkverbindungen Prüfeinrichtungen angeschlossen sind;
- Figur 4: eine schematische Darstellung mehrerer miteinander verbundener Prüfeinrichtungen;
- Figur 5: Blockschaltdiagramme mehrerer Prüfeinrichtungen; und
- Figur 6: die Architektur nach Figur 3, wobei mehrere Prüfeinrichtungen an Netzwerkverbindungen angekoppelt sind.

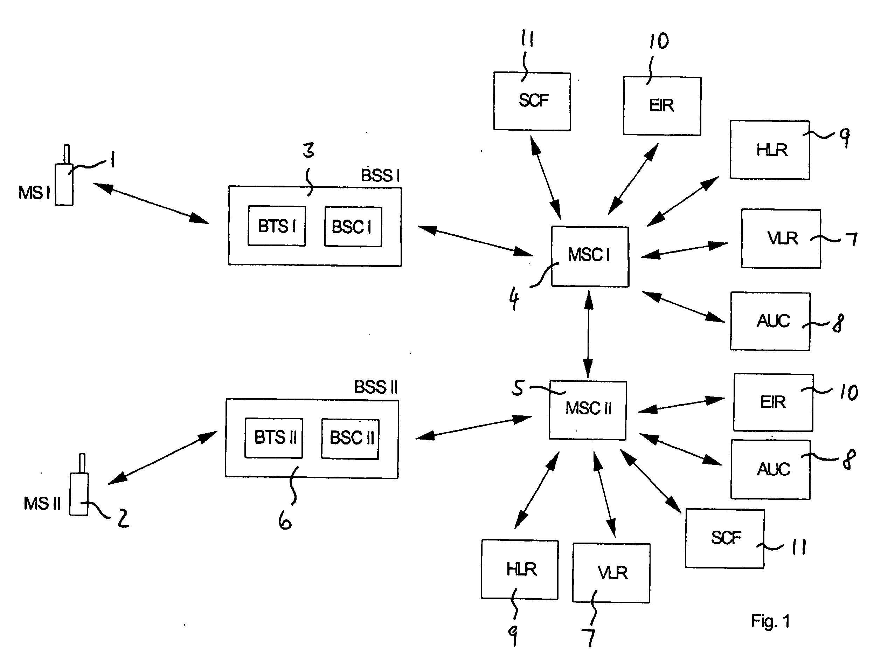

Figur 1 zeigt eine typische Architektur für ein Netzwerk, in welchem der GSM-Standard zur Informationsübertragung genutzt wird. Mobilstationen (MSI, MSII) 1, 2 ermöglichen dem Benutzer jeweils den Zugang zum GSM-Netz. Die Mobilstationen 1, 2 bestehen aus dem Mobilgerät und einem speziellen Benutzermodul (SIM - Subscriber Identity Module). Um elektronische Informationen mit der anderen Mobilstation 2 auszutauschen, kann die Mobilstation 1 mit einem BSSI 3 (BSS - Base Station System einer Funkzelle) Kontakt aufnehmen, welches einerseits die Schnittstelle zu den über Funk erreichbaren Mobilstationen 1, 2 und andererseits zur festen Infrastruktur des GSM-Netzes bildet. Ein oder mehrere BSSs sorgen in ihren jeweiligen Funkzellen für die geographische Funkversorgung des mobilen Kommunikationsnetzes und stellen bei Bedarf individuelle Verbindungen mit den sich frei bewegenden Mobilstationen 1, 2 her. Ein BSS läßt sich weiter in eine oder mehrere Sende-/Empfangsstationen (BTS - Base Transceiver Station) und eine zugehörige zentrale Steuereinrichtung (BSC - Base Station Controller) untergliedern.

Nachdem die Mobilstation 1 mit der BSSI 3 eine Verbindung aufgebaut hat, wird eine Gesprächsanforderung der Mobilstation 1 an eine mobile Vermittlungseinrichtung MSCI 4 (MSC - Mobile Switching Center) weitergeleitet. Die MSCI 4 stellt Schnittstellen gegenüber den angeschlossenen BSSs, anderen MSCs, Datenbanken bzw. Registern 7, ..., 11 (VLR - Visited Location Register, HLR - Home Location Register, AUC - Authentification Register, EIR - Equipment Identification Register, SCF - Switching Control Function) und/oder angeschlossenen Endeinrichtungen bereit.

Das von der Mobilstation MSI 1 angeforderte Gespräch wird dann mittels des Aufbaus einer Verbindung zwischen der mobilen Vermittlungseinrichtung MSCI 4 und einer weiteren mobilen Vermittlungseinrichtung MSCII 5 weitergeleitet. Die weitere mobile Vermittlungseinrichtung MSCII 5 baut dann eine Verbindung zu einem weiteren BSSII 6 auf. Abschließend wird eine Verbindung zwischen dem weiteren BSSII 6 und der anderen Mobilstation MSII 5 hergestellt. Auf diese Weise können zwischen der Mobilstation MSI 1 und der anderen Mobilstation MSII 2 elektronische Signale ausgetauscht werden.

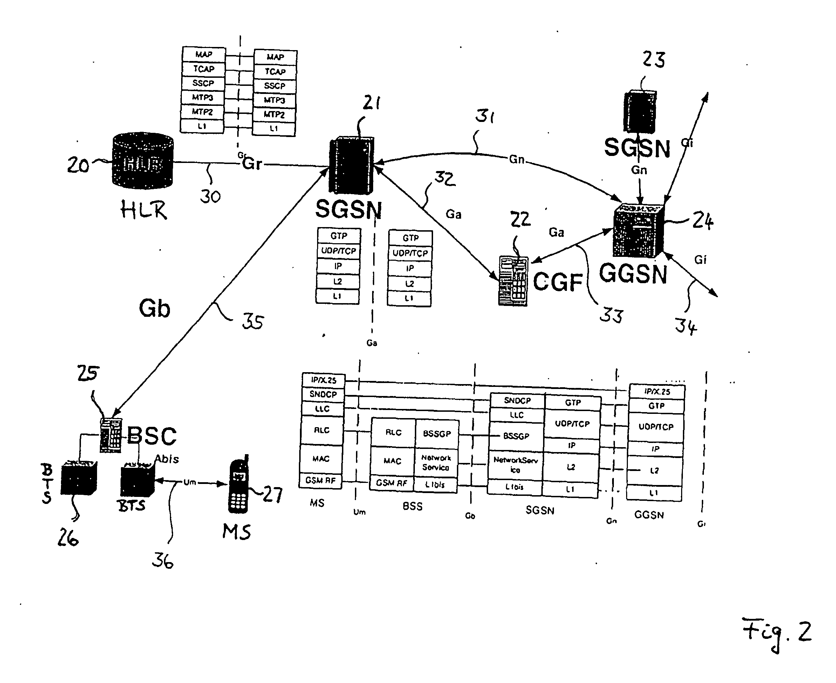

Figur 2 zeigt beispielhaft eine Teilstruktur eines Netzwerks, in welchem Mobilkommunikation auf der Basis von GPRS stattfindet. Der elektronische Datenaustausch zwischen Netzwerkelementen 20, ..., 27, beispielsweise zwischen SGSN (Serving GPRS Support Node) und HLR (Home Location Register), basiert auf jeweiligen schnittstellen-bezogenen Protokollstandards. Beispiele für die schnitstellen-bezogenen Standards sind Figur 2 mittels entsprechender Bezeichnungen, wie Gr, Ga, Gn oder Gi, dargestellt. Diese Bezeichnungen charakterisieren den auf der jeweils zugehörigen Netzwerkverbindung 30,..., 36, die in Figur 2 mittels eines jeweiligen Pfeils gezeigt sind, genutzten Übertragungsstandard. Bei dem jeweiligen Datenaustausch werden verschiedene Protokollebenen bzw. -schichten, beispielsweise GTP, MAP, ... genutzt, die eine jeweilige Funktion erfüllen (vgl. beispielsweise den rechten unteren Bereich in Figur 2).

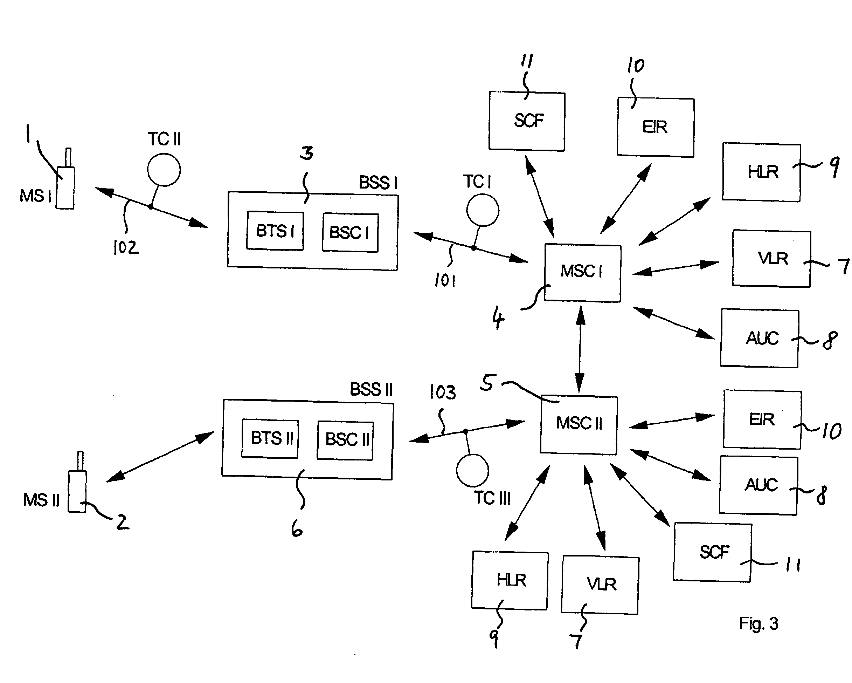

Figur 3 zeigt die Architektur nach Figur 1, wobei an einzelne Verbindungen innerhalb der Architektur stationäre oder portable Prüfeinrichtungen TCI, TCII bzw. TCIII, beispielsweise sogenannte Test-/Prüfcomputer, angeschlossen sind. Die Prüfeinrichtungen TCI, TCII bzw. TCIII sind in der Lage, die elektronischen Signale zu erfassen, die über die jeweilige Verbindung 101, 102 bzw. 103 in der Netzwerkarchitektur ausgetauscht werden. Zu diesem Zweck weisen die Prüfeinrichtungen TCI, TCII bzw. TCIII geeignet Meßmodule auf, die beispielsweise als solche aus dem Bereich der Meß- und Prüftechnik für das zu testende Netzwerk bekannt sind. An welche Verbindungen innerhalb der Netzwerkarchitektur Prüfeinrichtungen angeschlossen werden, kann in Abhängigkeit von einem bestimmten Anwendungsfall festgelegt werden. Für die Auswahl der zu prüfenden Verbindungen können vorzugsweise statistische Informationen, insbesondere zur Fehlerhäufigkeit und dem Lastverhalten, herangezogen werden. Um nach dem Anschluß an die jeweilige Verbindung 101, 102 bzw. 103 in der Netzwerkarchitektur für die konkrete Prüfaufgabe nutzbar zu sein, werden die Prüfeinrichtungen TCI, TCII bzw. TCIII unter Nutzung geeigneter Software konfiguriert.

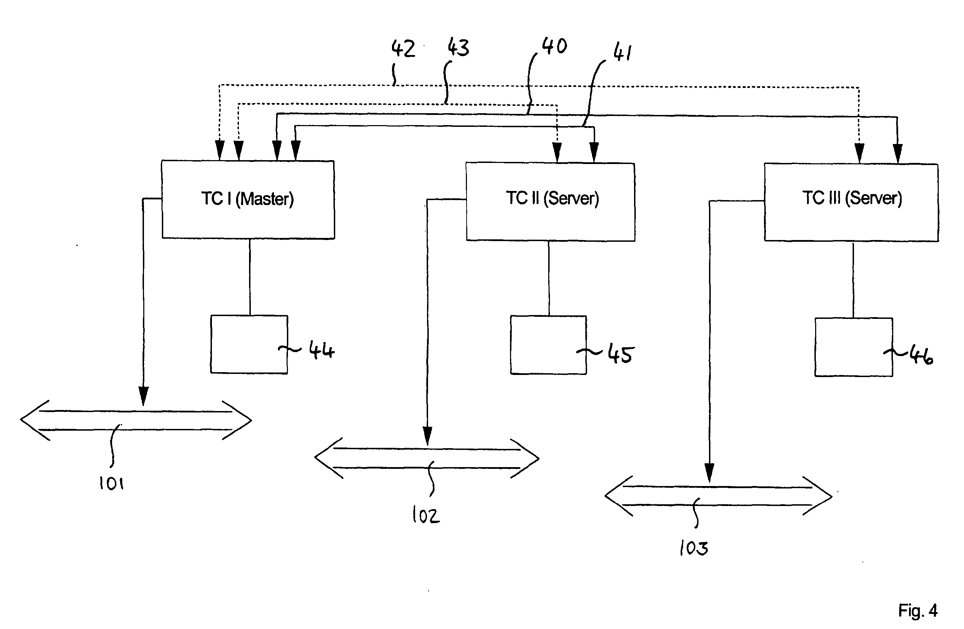

Zum Auszuführen einer bestimmten Prüfaufgabe kann zwischen den Prüfeinrichtungen TCI, TCII bzw. TCIII eine jeweilige Signal- und Meßdatenverbindung ausgebildet werden. In Figur 4 sind Signal- und Meßdatenverbindungen 40, 41 zwischen den Prüfeinrichtungen TCI, TCII bzw. TCIII als durchgezogene Linien schematisch dargestellt. Beispielhaft wird angenommen, daß die Prüfeinrichtung TCI für die Prüfaufgabe eine Master-Funktion übernimmt und die weiteren Prüfeinrichtungen TCII und TCIII in einer untergeordneten Betriebsart (Server-Betriebsart bzw. Server-Betriebsart) betrieben werden. Grundsätzlich kann jedoch jede der Prüfeinrichtungen TCI, TCII bzw. TCIII eine Master- oder eine Server-Funktion übernehmen. Die Funktion der jeweiligen Prüfeinrichtung wird in Abhängigkeit von der Prüfaufgabe elektronisch dadurch festgelegt, daß die jeweilige Prüfeinrichtung TCI, TCII bzw. TCIII entsprechend der Aufgabe konfiguriert wird. Diese Konfiguration erfolgt zweckmäßig mittels Fernbedienung, was insbesondere in Netzwerken mit großer Flächenausdehnung von Vorteil ist.

Die als Master-Prüfeinrichtung konfigurierte Prüfeinrichtung TCI übernimmt im vorliegenden Fall die Steuerung der Prüfaufgabe. Zum Ausführen der Prüfaufgabe werden die Prüfeinrichtungen TCI, TCII, TCIII auf Veranlassung einer Steuereinrichtung der Master-Prüfeinrichtung TCI, die einen Prozessor und Speichermittel umfaßt, zeitlich synchronisiert, um im Rahmen der Prüfaufgabe eine Triggerung zu gewährleisten. Zu diesem Zweck werden über Synchronisierungsverbindungen 42, 43 Zeitnormalsignale ausgetauscht. Die zeitlich noch genauere Synchronisierung der Prüfeinrichtungen TCI, TCII, TCIII (z.B. +/-20 ppm, was von der Übertragungsgeschwindigkeit abhängt) kann mit Hilfe einer Funkuhr oder eines über Satellit zu empfangenden Zeitnormals erfolgen.

Nachdem die zeitliche Synchronisierung automatisch erfolgt ist, initiiert die Master-Prüfeinrichtung TCI den Prüfvorgang. Im Rahmen des Prüfvorgangs werden von allen Prüfeinrichtungen, die in Abhängigkeit von der Prüfaufgabe genutzt werden, mit einem exakten Zeitstempel versehene Prüfsignale von der jeweiligen Verbindung 101, 102 bzw. 103 abgegriffen, an welche die Prüfeinrichtung angeschlossen ist. Die erfaßten Prüfsignale werden dann von den Server-Prüfeinrichtungen TCII und TCIII an die Master-Prüfeinrichtung TCI übermittelt. In der Master-Prüfeinrichtung TCI werden die dort empfangenen Prüfsignale einander so zugeordnet, daß anschließend mit Hilfe der Master-Prüfeinrichtung TCI eine der zeitlichen und funktionellen Hierarchie der erfaßten Prüfsignale entsprechende Auswertung erfolgen kann, um hieraus ein Prüfergebnis abzuleiten. Die Verarbeitung/Auswertung der erfaßten Prüfsignale kann zumindest teilweise auch schon mit der Server-Prüfeinrichtungen TCII und TCIII ausgeführt werden, so daß insbesondere eine teilweise Aufbereitung der Prüfsignale möglich ist, ggf. unter Berücksichtigung der Zeitstempel.

Die Prüfeinrichtungen TCI, TCII, TCIII können einzeln oder alle mit Mitteln zum Erzeugen von Simulationssignalen ausgestattet sein. Mit Hilfe der Simulationssignale werden elektronische Signale erzeugt und in die jeweilige Verbindung 101, 102 bzw. 103 eingekoppelt. Auf diese Weise ist es möglich, elektronische Prüf- bzw. Testsignale in das Netzwerk einzuspeisen und deren Übertragung in dem Netzwerk mit Hilfe anderer Prüfeinrichtungen TCI, TCII, TCIII zu erfassen sowie die automatische Fehlerkontrolle und geeignete Gegenmaßnahmen nach internationalem Standard zu überprüfen.

Gemäß Figur 4 sind die Prüfeinrichtungen TCI, TCII, TCIII jeweils mit einer Bildschirmeinrichtung 44, 45 bzw. 46 verbunden, die insbesondere zur Darstellung von Prüfergebnissen genutzt werden kann. Es kann vorgesehen sein, daß nicht alle oder keine der Prüfeinrichtungen TCI, TCII, TCIII mit einer Bildschirmeinrichtung verbunden sind.

Die Verteilung der Prüfeinrichtungen TCI, TCII, TCIII, die beispielsweise statistischen Anforderungen bezüglich der Fehlerhäufigkeit in bestimmten Netzwerkverbindungen genügen kann, über die Netzwerkarchitektur und deren flexible Einsetzbarkeit (Master/Server-Betrieb) in Abhängigkeit von der konkreten Prüfaufgabe hat den wesentlichen Vorteil, daß auch beim Ausfall einzelner Prüfeinrichtungen und/oder einzelner Netzwerkelemente ein anwendungsspezifisches Prüfverfahren festlegbar ist. Beim Ausfall einer als Master-Prüfeinrichtung vorgesehenen Prüfeinrichtung kann diese Aufgabe von einer anderen Prüfeinrichtung übernommen werden. Auf diese Weise ist eine dem Internet-Prinzip ähnliche, hohe Test- bzw. Prüfsystem-Verfügbarkeit erreichbar.

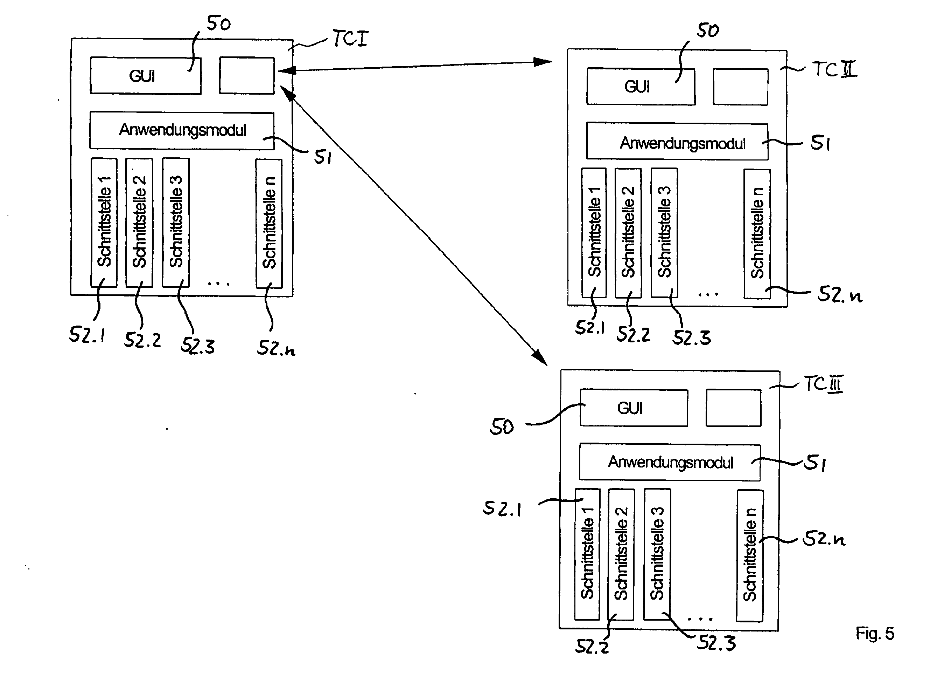

Figur 5 zeigt eine schematische Darstellung von Blockdiagrammen der miteinander in Verbindung stehenden Prüfeinrichtungen TCI, TCII und TCIII. Die Prüfeinrichtungen TCI, TCII, TCIII weisen jeweils eine Benutzerschnittstelle 50 (GUI - Graphical User Interface) zum Erfassen und Ausgeben von Benutzereingaben, ein oder mehrere Anwendungsmodule 51 zum Konfigurieren der Prüfeinrichtung für die jeweilige Test-/Meßaufgabe, ein oder mehrere Prüfschnittstellen bzw. -modulen 52.1, 52.2 zum Erfassen von Prüfsignalen, eine Synchronisationsschnittstelle 52.3 zum Empfangen und/oder Senden von Synchronisierungssignalen sowie eine Interkommunikationsschnittstelle 52.n auf, wobei sich die verschiedenen Schnittstellenarten hinsichtlich der spezifischen Ausprägung und der jeweils vorhandenen Anzahl in Abhängigkeit vom Anwendungsfall unterscheiden können.

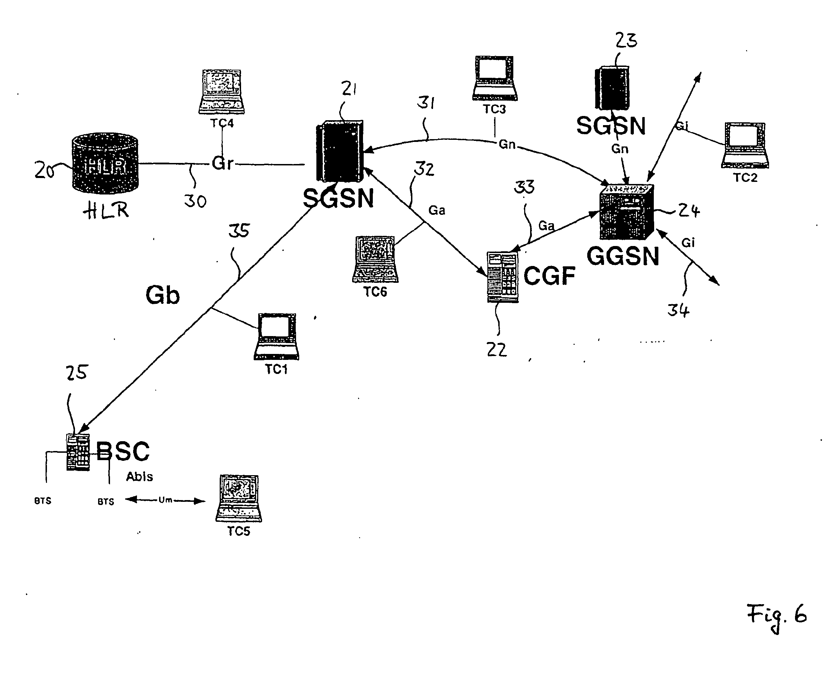

In Figur 6 ist beispielhaft die Anbindung mehrerer Prüfeinrichtungen TC1, .., TC6 in der Teilstruktur eines mobilen Kommunikationsnetzwerks gemäß Figur 3 dargestellt. Beim Ausführen der Prüfaufgabe tauschen die mehreren Prüfeinrichtungen TC1, .., TC6 dann in Abhängigkeit von der Prüfaufgabe über (virtuelle) Interkommunikationsverbindungen Meßdaten und weitere Signale aus.

Die Erfindung wurde am Beispiel eines Telekommunikationsnetzwerkes beschrieben, ist jedoch nicht auf ein solches Netzwerk beschränkt. Das beschriebene Verfahren zum Prüfen/Testen mit Hilfe der mehreren Prüfeinrichtungen entfaltet seine vorteilhafte Wirkung auch in Verbindung mit anderen Arten von Netzwerken, in denen mehrere Einrichtungen netzartig miteinander verbunden sind, so daß über entsprechende Netzwerkverbindungen drahtlos und/oder drahtgebunden elektronische Daten ausgetauscht werden können. Hierbei werden die Prüfeinrichtungen angepaßt, um die in dem jeweiligen Netzwerk übertragenen Signale, beispielsweise Prozeßdaten erfassen zu können. Die Konfiguration des Master-Server-Systems erfolgt in der beschriebenen Weise. So kann das Master-Server-System auch in einem Netzwerk energietechnischer oder verkehrstechnischer Anlagen ausgebildet werden, um zu prüfen und zu testen.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Prüfen elektronischer Signale in einem Netzwerk mit Netzwerkeinrichtungen zwischen denen über Netzwerkverbindungen Informationen mit Hilfe elektronischer Datenübertragung austauschbar sind, wobei mehrere Prüfeinrichtungen (TCI,TCII, TCIII) jeweils an eine oder mehrere der Netzwerkverbindungen (101, 102, 103) gekoppelt sind, so daß mit Hilfe der Prüfeinrichtungen (TCI; TCII; TCIII) jeweils elektronische Signale betreffend die elektronische Datenübertragung über die eine oder die mehreren Netzwerkverbindungen (101, 102, 103), an welche die jeweilige Prüfeinrichtung gekoppelt ist, erfaßt werden können, das Verfahren die folgenden Schritte aufweisend:
- Ausbilden einer Prüfverbindung (41) zum Austauschen von elektronischen Signalen, die Prüf- und/oder Steuersignale umfassen, zwischen einer der Prüfeinrichtungen (TCI) und mindestens einer anderen der Prüfeinrichtungen (TCII) in Abhängigkeit von einer aktuellen Prüfaufgabe, wobei die eine Prüfeinrichtung (TCI) an eine Netzwerkverbindung (101) und die mindestens eine andere Prüfeinrichtung (TCII) an eine andere Netzwerkverbindung (102) in dem Netzwerk gekoppelt sind;
- Ausbilden einer Master-Server-Konfiguration in Abhängigkeit von der aktuellen Prüfaufgabe, wobei die eine Prüfeinrichtung (TCI) als eine Master-Prüfeinrichtung und die mindestens eine andere Prüfeinrichtung (TCII) als eine Server-Prüfeinrichtung konfiguriert werden;
- automatisches zeitliches Synchronisieren der Master-Prüfeinrichtung (TCI) und der Server-Prüfeinrichtung (TCII);
- elektronisches Initiieren einer Erfassung von aktuellen, elektronischen Prüfsignalen durch die Master-Prüfeinrichtung (TCI) auf der anderen Netzwerkverbindung (102) mittels der Server-Prüfeinrichtung (TCII) und Zuordnen einer elektronischen Zeitinformation zu den erfaßten aktuellen, elektronischen Prüfsignalen unter automatischer Berücksichtigung des vorher erfolgten zeitlichen Synchronisierens;
- Verarbeiten der erfaßten aktuellen, elektronischen Prüfsignale und der zugeordneten elektronischen Zeitinformation durch die Server-Prüfeinrichtung (TCII) und/oder die Master-Prüfeinrichtung (TCI) unter automatischer Berücksichtigung der zugeordneten elektronischen Zeitinformation;
- Erzeugen von Simulationssignalen mittels der Master-Prüfeinrichtung (TCI) und / oder der Server-Prüfeinrichtung (TCII) und Einspeisen der Simulationssignale in das Netzwerk, wobei
- im Fall des Erzeugens der Simulationssignale mit der Master-Prüfeinrichtung (TCI) in der Master-Prüfeinrichtung (TCI) elektronische Informationen über die Simulationssignale, einschließlich zugehöriger elektronischer Simulationssignal-Zeitinformation in Abhängigkeit von dem vorher erfolgten zeitlichen Synchronisieren, gespeichert werden und die in der Master-Prüfeinrichtung (TCI) gespeicherten elektronischen Informationen über die Simulationssignale beim Verarbeiten der von der Server-Prüfeinrichtung (TCII) an die Master-Prüfeinrichtung (TCI) übermittelten aktuellen, elektronischen Prüfsignale automatisch berücksichtigt werden, und
- im Fall des Erzeugens der Simulationssignale mit der Server-Prüfeinrichtung (TCII) elektronische Informationen über die Simulationssignale, einschließlich zugehöriger elektronischer Simulationssignal-Zeitinformation in Abhängigkeit von dem vorher erfolgten zeitlichen Synchronisieren, von der Server-Prüfeinrichtung (TCII) an die Master-Prüfeinrichtung (TCI) übermittelt werden und die von der Server-Prüfeinrichtung (TCII) an die Master-Prüfeinrichtung (TCI) übermittelten elektronischen Informationen über die Simulationssignale beim Verarbeiten der von der Server-Prüfeinrichtung (TCII) an die Master-Prüfeinrichtung (TCI) übermittelten aktuellen; elektronischen Prüfsignale automatisch berücksichtigt werden.

2. Verfahren nach Anspruch 1, **dadurch gekennzeichnet, daß** nach einem Abschluß der aktuellen Prüfaufgabe eine weitere aktuelle Prüfaufgabe ausgeführt wird, bei der eine weitere Master-Server-Konfiguration in Abhängigkeit von der weiteren aktuellen Prüfaufgabe ausgebildet wird, wobei die mindestens eine andere Prüfeinrichtung (TCII) als eine Master-Prüfeinrichtung und die eine Prüfeinrichtung (TCI) als eine Server-Prüfeinrichtung konfiguriert werden.

3. Verfahren nach Anspruch 1 oder 2, **dadurch gekennzeichnet, daß** das Ausbilden der Master-Server-Konfiguration in Abhängigkeit von der aktuellen Prüfaufgabe und / oder das Ausbilden der weiteren Master-Server-Konfiguration in Abhängigkeit von der weiteren aktuellen Prüfaufgabe auf einen vorgegebenen Zeitraum begrenzt werden, dessen zeitliche Dauer von der aktuellen bzw. von der weiteren aktuellen Prüfaufgabe abhängt.

4. Verfahren nach einem der vorangehenden Ansprüche, **dadurch gekennzeichnet, daß** zwischen der Master-Prüfeinrichtung (TCI) und der Server-Prüfeinrichtung (TCII) zum automatischen zeitlichen Synchronisieren eine Synchronisierungsverbindung (43) ausgebildet wird, über welche Synchronisierungssignale ausgetauscht werden.

5. Verfahren nach Anspruch 4, **dadurch gekennzeichnet, daß** Synchronisierungssignale, die von der Master-Prüfeinrichtung (TCI) an die Server-Prüfeinrichtung (TCII) übersandt werden, Zeitnormalsignale umfassen, so daß das automatische zeitliche Synchronisieren von der Master-Prüfeinrichtung (TCI) veranlaßt wird.

6. Verfahren nach einem der Ansprüche 1 bis 5, **dadurch gekennzeichnet, daß** zum automatischen zeitlichen Synchronisieren von der Master-Prüfeinrichtung (TCI) und/oder von der Server-Prüfeinrichtung (TCII) Zeitnormalsignale empfangen werden, die über Funkverbindungen gesendet werden.

7. Verfahren nach einem der vorangehenden Ansprüche, **dadurch gekennzeichnet, daß** beim Ausbilden der Prüfverbindung (41) und beim Ausbilden der Master-Server-Konfiguration in Abhängigkeit von der aktuellen Prüfaufgabe und/oder beim Ausbilden der weiteren Master-Server-Konfiguration in Abhängigkeit von der weiteren aktuellen Prüfaufgabe elektronische Informationen über charakteristische Kenngrößen des Netzwerks automatisch berücksichtigt werden.

8. Verfahren nach einem der vorangehenden Ansprüche, **dadurch gekennzeichnet, daß** die Master-Server-Konfiguration in Abhängigkeit von der aktuellen Prüfaufgabe und/oder die weitere Master-Server-Konfiguration in Abhängigkeit von der weiteren aktuellen Prüfaufgabe mit Hilfe eines Client-Server-Verfahrens ausgebildet werden.

9. Vorrichtung (TCI, TCII bzw. TCIII) zum Prüfen elektronischer Signale in einem Netzwerk mit Netzwerkeinrichtungen zwischen denen über Netzwerkverbindungen Informationen mit Hilfe elektronischer Datenübertragung austauschbar sind, die Vorrichtung umfassend:
- Anschlußmittel zum Ankoppeln an eine oder mehrere der Netzwerkverbindungen (101, 102 bzw. 103);
- Schnittstellenmittel zum Ausbilden einer Prüfverbindung (40 bzw. 41) mit mindestens einer anderen Prüfvorrichtung in Abhängigkeit von einer aktuellen Prüfaufgabe, um elektronische Daten, die Prüf- und/oder Steuersignale umfassen, mit der mindestens einen anderen der Prüfvorrichtung auszutauschen;
- Konfigurationsmittel zum Ausbilden einer Master- oder einer Server-Konfiguration mit der mindestens einen anderen Prüfvorrichtung in Abhängigkeit von der aktuellen Prüfaufgabe;
- Synchronisierungsmittel zum zeitlichen Synchronisieren mit der mindestens einen anderen Prüfvorrichtung;
- Erfassungsmittel zum Erfassen aktueller elektronischer Prüfsignale betreffend eine elektronische Datenübertragung über die eine oder die mehreren Netzwerkverbindungen;
- Zuordnungsmittel zum automatischen Zuordnen einer elektronischen Zeitinformation zu erfaßten aktuellen, elektronischen Prüfsignalen unter automatischer Berücksichtigung des zeitlichen Synchronisierens mit der mindestens einen anderen Prüfvorrichtung;
- Sendemittel zum Senden der erfaßten aktuellen, elektronischen Prüfsignale und der zugeordneten elektronischen Zeitinformation an die mindestens eine andere Prüfvorrichtung;
- Verarbeitungsmittel zum Verarbeiten der erfaßten aktuellen, elektronischen Prüfsignale und der zugeordneten elektronischen Zeitinformation; und
- Simulationsmittel zum Erzeugen von Simulationssignalen und zum Einspeisen der Simulationssignale in das Netzwerk sowie zum Speichern elektronischer Informationen über die Simulationssignale, einschließlich zugehöriger elektronischer Simulationssignal-Zeitinformation in Abhängigkeit von dem zeitlichen Synchronisieren, in einer als Master-Prüfvorrichtung ausgebildeten Prüfvorrichtung für den Fall des Erzeugens der Simulationssignale in der als Master-Prüfvorrichtung ausgebildeten Prüfvorrichtung und zum Übermitteln elektronischer Informationen über die Simulationssignale, einschließlich zugehöriger elektronischer Simulationssignal-Zeitinformation in Abhängigkeit von dem vorher erfolgten zeitlichen Synchronisieren, von einer als Server-Prüfvorrichtung ausgebildeten Prüfvorrichtung an die als Master-Prüfvorrichtung ausgebildeten Prüfvorrichtung für den Fall des Erzeugens der Simulationssignale in der als Server-Prüfvorrichtung ausgebildeten Prüfvorrichtung.

10. Vorrichtung nach Anspruch 9, **gekennzeichnet durch** Anzeigemittel (44, 45 bzw. 46) zum elektronischen Ausgeben der erfaßten aktuellen, elektronischen Prüfsignale und/oder der mit Hilfe der Verarbeitungsmittel verarbeiteten aktuellen, elektronischen Prüfsignale.

11. Vorrichtung nach Anspruch 9 oder 10, **gekennzeichnet durch** eine Benutzerschnittstelle (50) zum Erfassen von Benutzereingaben und/oder zum Ausgeben von Benutzerinformationen.

12. Vorrichtung nach einem der Ansprüche 9 bis 11, **gekennzeichnet durch** Empfangsmittel zum Empfangen von Zeitnormalsignalen, welche über Funkverbindungen gesendet werden.

13. Verwendung eines Verfahrens nach einem der Ansprüche 1 bis 8 und /oder einer Vorrichtung nach einem der Ansprüche 9 bis 12 in einem Telekommunikationsnetzwerk.

14. Verwendung eines Verfahrens nach einem der Ansprüche 1 bis 8 und /oder einer Vorrichtung nach einem der Ansprüche 9 bis 12 in einem Energieversorgungsnetz.

15. Verwendung eines Verfahrens nach einem der Ansprüche 1 bis 8 und /oder einer Vorrichtung nach einem der Ansprüche 9 bis 12 in einem Netzwerk von Verkehrstechnikanlagen.

16. Verwendung eines Verfahrens nach einem der Ansprüche 1 bis 8 und/oder einer Vorrichtung nach einem der Ansprüche 9 bis 12 in einem Netzwerk von verfahrenstechnischen Meß- / Regelanlagen.

## Claims

1. Method for testing electronic signals in a network having network devices between which information can be interchanged via network connections with the aid of electronic data transmission, with a plurality of test devices (TCI; TCII; TCIII) respectively being coupled to one or more of the network connections (101, 102, 103), such that the test devices (TCI; TCII; TCIII) can in each case be used to record electronic signals relating to the electronic data transmission via the one or more network connections (101, 102, 103) to which the respective test device is coupled, with the method having the following steps:
- formation of a test connection (41) for interchanging electronic signals which comprise test and/or control signals between one of the test devices (TCI) and at least one other of the test devices (TCII) as a function of an actual test task, with the first test device (TCI) being coupled to a network connection (101) and the at least one other test device (TCII) being coupled to another network connection (102) in the network;
- formation of a master/server configuration as a function of the actual test task, with the first test device (TCI) being configured as a master test device, and the at least one other test device (TCII) being configured as a server test device;
- automatic time synchronization of the master test device (TCI) and of the server test device (TCII);
- electronic initiation of recording of actual, electronic test signals by the master test device (TCI) on the other network connection (102) by means of the server test device (TCII), and association of electronic time information with the recorded actual electronic test signals, with the previous time synchronization being taken into account automatically;
- processing of the recorded actual electronic test signals and the associated electronic time information by the server test device (TCII) and/or the master test device (TCI) with the associated electronic time information being taken into account automatically;
- production of simulation signals by means of the master test device (TCI) and/or by means of the server test device (TCII), and feeding of the simulation signals to the network, wherein
- when the simulation signals are produced by the master test device (TCI), electronic information is stored in the master test device (TCI) about the simulation signals, including associated electronic simulation signal time information, as a function of the previous time synchronization, and the electronic information stored in the master test device (TCI) about' the simulation signals is automatically taken into account in the processing of the actual electronic test signals transmitted from the server test device (TCII) to the master test device (TCI), and
- when the simulation signals are produced by the server test device (TCII), electronic information about the simulation signals, including associated electronic simulation signal time information, is transmitted from the server test device (TCII) to the master test device (TCI) as a function of the previous time synchronization, and the electronic information transmitted from the server test device (TCII) to the master test device (TCI) about the simulation signals is automatically taken into account in the processing of the actual electronic test signals transmitted from the server test device (TCII) to the master test device (TCI).

2. Method according to Claim 1, **characterized in that**, after completion of the actual test task, a further actual test task is carried out, in which a further master/server configuration is formed as a function of the further actual test task, with the at least one other test device (TCII) being configured as a master test device, and the first test device (TCI) being configured as a server test device.

3. Method according to Claim 1 or 2, **characterized in that** the formation of the master/server configuration is limited as a function of the actual test task, and/or the formation of the further master/server configuration is limited to a predetermined time period as a function of the further actual test task, the time of which predetermined time period depends on the actual test task or on the further actual test task, respectively.

4. Method according to one of the preceding claims, **characterized in that** a synchronization connection. (43), via which synchronization signals are interchanged, is formed between the master test device (TCI) and the server test device (TCII), for automatic time synchronization.

5. Method according to Claim 4, **characterized in that** synchronization signals which are sent from the master test device (TCI) to the server test device (TCII) comprise time standard signals, so that the automatic time synchronization is initiated by the master test device (TCI).

6. Method according to one of Claims 1 to 5, **characterized in that** time standard signals which are sent via radio connections are received from the master test device (TCI) and/or from the server test device (TCII) for automatic time synchronization.

7. Method according to one of the preceding claims, **characterized in that** electronic information about characteristic variables relating to the network is automatically taken into account in the formation of the test connection (41) and in the formation of the master/server configuration as a function of the actual test task and/or in the formation of the further master/server configuration as a function of the further actual test task.

8. Method according to one of the preceding claims, **characterized in that** the master/server configuration is formed as a function of the actual test task, and/or the further master/server configuration is formed as a function of the further actual test task, using a client/server method.

9. Apparatus (TCI, TCII or TCIII) for testing electronic signals in a network having network devices between which information can be interchanged via network connections with the aid of electronic data transmission, with the apparatus comprising:
- connecting means for coupling to one or more of the network connections (101, 102 or 103);
- interface means for formation of a test connection (40 or 41) to at least one other test apparatus as a function of an actual test task, in order to interchange electronic data, which comprises test and/or control signals, with the at least one other test apparatus;
- configuration means for formation of a master or a server configuration with the at least one other test apparatus as a function of the actual test task;
- synchronization means for time synchronization with the at least one other test apparatus;
- recording means for recording actual electronic test signals relating to an electronic data transmission via the one or more network connections;
- association means for automatic association of electronic time information with recorded actual, electronic test signals, with the time synchronization being taken into account automatically by the at least one other test apparatus;
- transmission means for sending the recorded actual electronic test signals and the associated electronic time information to the at least one other test apparatus;
- processing means for processing the recorded actual electronic test signals and the associated electronic time information; and
- simulation means for production of simulation signals and for feeding the simulation signals to the network, as well as for storage of electronic information about the simulation signals, including associated electronic simulation signal time information as a function of the time synchronization, in a test apparatus, which is in the form of a master test apparatus when the simulation signals are produced in the test apparatus which is in the form of a master test apparatus, and for transmission of electronic information about the simulation signals, including associated electronic simulation signal time information as a function of the previous time synchronization, from a test apparatus which is in the form of a server test apparatus to the test apparatus which is in the form of a master test apparatus when the simulation signals are produced in the test apparatus in the form of a server test apparatus.

10. Apparatus according to Claim 9, **characterized by** display means (44, 45 and 46) for electronically outputting the recorded actual electronic test signals and/or the actual electronic test signals processed with the aid of the processing means.

11. Apparatus according to Claim 9 or 10, **characterized by** a user interface (50) for recording user inputs and/or for outputting user information.

12. Apparatus according to one of Claims 9 to 11, **characterized by** receiving means for reception of time standard signals which are transmitted via radio connections.

13. Use of a method according to one of Claims 1 to 8 and/or of an apparatus according to one of Claims 9 to 12 in a telecommunications network.

14. Use of a method according to one of Claims 1 to 8 and/or of an apparatus according to one of Claims 9 to 12 in a power supply network.

15. Use of a method according to one of Claims 1 to 8 and/or of an apparatus according to one of Claims 9 to 12 in a network of traffic engineering installations.

16. Use of a method according to one of Claims 1 to 8 and/or of an apparatus according to one of Claims 9 to 12 in a network of traffic measurement/control installations.

## Revendications

1. Procédé pour le contrôle de signaux électroniques dans un réseau à équipements de réseau entre lesquels des informations sont communicables par des connexions de réseau au moyen d'une transmission électronique de données, plusieurs équipements de réseau (TCI ; TCII ; TCIII) étant couplés chacun à une ou plusieurs connexions de réseau (101, 102, 103), de manière qu'au moyen des équipements de réseau (TCI ; TCII ; TCIII) des signaux électroniques concernant la transmission électronique de données par la ou les connexions de réseau (101, 102, 103) auxquelles l'équipement de contrôle correspondant est couplé puissent être saisis, ledit procédé comportant les étapes suivantes :
- formation d'une connexion de contrôle (41) pour la communication de signaux électroniques comprenant des signaux de contrôle et/ou de commande, entre un des équipements de contrôle (TCI) et un autre des équipements de contrôle (TCII) au moins en fonction d'une tâche de contrôle actuelle, le premier équipement de contrôle (TCI) étant couplé à une connexion de réseau (101) et l'autre équipement de contrôle au moins (TCII) à une autre connexion de réseau (102) à l'intérieur du réseau ;
- formation d'une configuration maître-serveur en fonction de la tâche de contrôle actuelle, le premier équipement de contrôle (TCI) étant configuré en tant qu'équipement de contrôle-maître et l'autre équipement de contrôle au moins (TCII) en tant qu'équipement de contrôle-serveur ;
- synchronisation temporelle automatique de l'équipement de contrôle-maître (TCI) et de l'équipement de contrôle-serveur (TCII) ;
- initialisation électronique d'une saisie de signaux électroniques de contrôle actuels par l'équipement de contrôle-maître (TCI) sur l'autre connexion de réseau (102) au moyen de l'équipement de contrôle-serveur (TCII) et attribution d'une information temporelle électronique sur les signaux électroniques de contrôle actuels par prise en compte automatique de la synchronisation temporelle précédemment effectuée ;
- traitement des signaux électroniques de contrôle actuels saisis et de l'information temporelle électronique attribuée par l'équipement de contrôle-serveur (TCII) et/ou l'équipement de contrôle-maître (TCI) par prise en compte automatique de l'information temporelle électronique attribuée ;
- génération de signaux de simulation au moyen de l'équipement de contrôle-maître (TCI) et/ou de l'équipement de contrôle-serveur (TCII) et émission des signaux de simulation dans le réseau, où
- dans le cas d'une génération des signaux de simulation avec l'équipement de contrôle-maître (TCI), des informations électroniques dans l'équipement de contrôle-maître (TCI) sur les signaux de simulation, incluant une information temporelle électronique de signal de simulation correspondante en fonction de la synchronisation temporelle précédemment effectuée, sont mémorisées, et les informations électroniques sur les signaux de simulation mémorisées dans l'équipement de contrôle-maître (TCI) sont automatiquement prises en compte lors du traitement des signaux électroniques de contrôle actuels transmis de l'équipement de contrôle-serveur (TCII) à l'équipement de contrôle-maître (TCI), et où
- dans le cas d'une génération des signaux de simulation avec l'équipement de contrôle-serveur (TCII), des informations électroniques sur les signaux de simulation, incluant une information temporelle électronique de signal de simulation correspondante en fonction de la synchronisation temporelle précédemment effectuée, sont transmises de l'équipement de contrôle-serveur (TCII) à l'équipement de contrôle-maître (TCI), et les informations électroniques sur les signaux de simulation transmises de l'équipement de contrôle-serveur (TCII) à l'équipement de contrôle-maître (TCI) sont automatiquement prisés en compte lors du traitement des signaux électroniques de contrôle actuels transmis de l'équipement de contrôle-serveur (TCII) à l'équipement de contrôle-maître (TCI).

2. Procédé selon la revendication 1, **caractérisé en ce qu'**à l'issue de la tâche de contrôle actuelle, une autre tâche de contrôle actuelle est exécutée, où une autre configuration maître-serveur est formée en fonction de l'autre tâche de contrôle actuelle, l'autre équipement de contrôle (TCII) étant configuré en tant qu'équipement de contrôle-maître, et le premier équipement de contrôle (TCI) en tant qu'équipement de contrôle-serveur.

3. Procédé selon la revendication 1 ou 2, **caractérisé en ce que** la formation de la configuration maître-serveur en fonction de la tâche de contrôle actuelle et/ou la formation de l'autre configuration maître-serveur en fonction de l'autre tâche de contrôle actuelle sont limitées à un délai prescrit, dont la durée dépend de la tâche de contrôle actuelle ou de l'autre tâche de contrôle actuelle.

4. Procédé selon l'une des revendications précédentes, **caractérisé en ce qu'**une connexion de synchronisation (43), par laquelle des signaux de synchronisation sont communiqués, est formée pour la synchronisation temporelle automatique entre l'équipement de contrôle-maître (TCI) et l'équipement de contrôle-serveur (TCII).

5. Procédé selon la revendication 4, **caractérisé en ce que** des signaux de synchronisation transmis de l'équipement de contrôle-maître (TCI) à l'équipement de contrôle-serveur (TCII) comprennent des signaux de temps normaux, si bien que la synchronisation temporelle automatique est déclenchée par l'équipement de contrôle-maître. (TCI).

6. Procédé selon l'une des revendications 1 à 5, **caractérisé en ce que** des signaux de temps normaux, adressés par liaisons radioélectriques, sont reçus pour la synchronisation temporelle automatique par l'équipement de contrôle-maître (TCI) et/ou par l'équipement de contrôle-serveur (TCII).

7. Procédé selon l'une des revendications précédentes, **caractérisé en ce que** des informations électroniques sur des grandeurs caractéristiques du réseau sont automatiquement prises en compte lors de la formation de la connexion de contrôle (41) et lors de la formation de la configuration maître-serveur en fonction de la tâche de contrôle actuelle, et/ou lors de la formation de l'autre configuration maître-serveur en fonction de l'autre tâche de contrôle actuelle.

8. Procédé selon l'une des revendications précédentes, **caractérisé en ce que** la configuration maître-serveur en fonction de la tâche de contrôle actuelle, et/ou l'autre configuration maître-serveur en fonction de l'autre tâche de contrôle actuelle sont formées au moyen d'un procédé client-serveur.

9. Dispositif (TCI, TCII ou TCIII) pour le contrôle de signaux électroniques dans un réseau à équipements de réseau entre lesquels des informations sont communicables par des connexions de réseau au moyen d'une transmission électronique de données, ledit dispositif comprenant :
- des éléments de raccordement pour le couplage à une ou plusieurs connexions de réseau (101, 102 ou 103) ;
- des éléments d'interface pour la formation d'une connexion de contrôle (40 ou 41) avec un autre dispositif de contrôle au moins en fonction d'une tâche de contrôle actuelle, pour communiquer des données électroniques contenant des signaux de contrôle et/ou de commande à l'autre dispositif de contrôle au moins ;
- des éléments de configuration pour la formation d'une configuration maître ou d'une configuration serveur avec l'autre dispositif de contrôle au moins en fonction de la tâche de contrôle actuelle ;
- des éléments de synchronisation pour la synchronisation temporelle avec l'autre dispositif de contrôle au moins ;
- des éléments de saisie pour la saisie de signaux électroniques de contrôle actuels concernant une transmission électronique de données par la ou les connexions de réseau ;
- des éléments d'attribution pour l'attribution automatique d'une information temporelle électronique sur les signaux. électroniques de contrôle actuels par prise en compte automatique de la synchronisation temporelle avec l'autre dispositif de contrôle au moins ;
- des éléments d'émission pour l'émission des signaux électroniques de contrôle actuels saisis et de et de l'information temporelle électronique attribuée ;
- des éléments de traitement pour le traitement des signaux électroniques de contrôle actuels saisis et de l'information temporelle électronique attribuée ; et
- des éléments de simulation pour la génération de signaux de simulation et leur émission dans le réseau ainsi que pour la mémorisation d'informations électroniques sur les signaux de simulation, incluant une information temporelle électronique de signal de simulation correspondante en fonction de la synchronisation temporelle, dans un dispositif de contrôle configuré en tant que dispositif de contrôle-maître, dans le cas de la génération des signaux de simulation avec le dispositif de contrôle configuré en tant que dispositif de contrôle-maître, et pour la transmission d'informations électroniques sur les signaux de simulation, incluant une information temporelle électronique de signal de simulation correspondante en fonction de la synchronisation temporelle précédemment effectuée, d'un dispositif de contrôle configuré en tant que dispositif de contrôle-serveur au dispositif de contrôle configuré en tant que dispositif de contrôle-maître, dans le cas de la génération des signaux de simulation avec le dispositif de contrôle configuré en tant que dispositif de contrôle-serveur.

10. Dispositif selon la revendication 9, **caractérisé par** des éléments d'indication (44, 45 ou 46) pour la sortie électronique des signaux électroniques de contrôle actuels saisis et/ou des signaux électroniques de contrôle actuels traités au moyen des éléments de traitement.

11. Dispositif selon la revendication 9 ou 10, **caractérisé par** une interface d'utilisateur (50) pour la saisie d'entrées d'utilisateur et/ou pour la sortie d'informations d'utilisateur.

12. Dispositif selon l'une des revendications 9 à 11, **caractérisé par** des éléments de réception pour la réception de signaux de temps normaux, adressés par liaisons radioélectriques.

13. Utilisation d'un procédé selon l'un des revendications 1 à 8 et/ou d'un dispositif selon l'une des revendications 9 à 12 dans un réseau de télécommunications.

14. Utilisation d'un procédé selon l'un des revendications 1 à 8 et/ou d'un dispositif selon l'une des revendications 9 à 12 dans un réseau de distribution électrique.

15. Utilisation d'un procédé selon l'un des revendications 1 à 8 et/ou d'un dispositif selon l'une des revendications 9 à 12 dans un réseau d'installations d'ingénierie de trafic.

16. Utilisation d'un procédé selon l'un des revendications 1 à 8 et/ou d'un dispositif selon l'une des revendications 9 à 12 dans un réseau d'installations techniques de mesure et de régulation.
